# FASCICULE DE BREVET EUROPEEN

(11) **EP 2 402 732 B1**
(45) Date de publication et mention de la délivrance du brevet: **30.07.2014**
(21) Numéro de dépôt: 11170180.1
(22) Date de dépôt: 16.06.2011
(51) Int. Cl.: G01N 9/00, G01N 35/10, B01L 3/00, B01L 3/02, A61J 1/20

(54) **Procédé d'injection d'un échantillon à analyser dans le tube d'injection d'une cellule de mesure, en particulier d'un densimètre**
Injektionsverfahren einer zu analysierenden Musterprobe in ein Injektionsrohr einer Messzelle, insbesondere eines Dichtemessgeräts
Method for injecting a sample to be analysed in the injection tube of a measuring cell, in particular of a densitometer

(30) Priorité: 02.07.2010 FR 1055362
(43) Date de publication de la demande: 04.01.2012
(73) Titulaire: Instrumentation Scientifique de Laboratoire (ISL), 14653 Carpiquet (FR)
(72) Inventeur: Marie, Patrick, 14980 Rots (FR); Cléris, Hervé, 14220 Curcy sur Orne (FR)
(74) Mandataire: Cabinet HERRBURGER

(56) Documents cités:
- WO-A1-97/32645
- WO-A1-2009/090627
- US-A- 5 316 730
- US-A- 5 827 262
- US-A1- 2005 255 604
- US-A1- 2009 000 188
- US-B1- 6 189 580

## Description

### Domaine de l'invention

La présente invention a pour objet un procédé d'injection d'un échantillon à analyser dans le tube d'injection d'une cellule de mesure, en particulier d'un densimètre.

### Etat de la technique

Parmi les mesures physiques devant être effectuées dans le cadre des procédés industriels, celle de la densité figure parmi les plus fréquement nécessaires.

A cet effet, les fabricants proposent sur le marché une gamme de densimètres basés sur différents principes dont tous présentent des avantages et des inconvénients.

A titre d'exemple un densimètre pouvant être utilisé de manière satisfaisante pour mesurer la densité d'un échantillon est équipé d'une cellule de mesure comportant les éléments suivants:
- une enceinte isotherme qui définit une chambre de mesure à sa partie interne,
- un tube en U destiné à être rempli par l'échantillon à analyser et s'étendant dans la chambre de mesure,
- des moyens permettant de faire vibrer le tube en U, et
- des moyens de lecture de la réponse vibratoire de ce tube.

Le tube en U d'une cellule densimétrique de ce type est fixé à la chambre de mesure au niveau de ses extrémités libres qui font saillie vers l'extérieur de cette chambre pour permettre l'injection de l'échantillon à analyser par un orifice d'injection et son évacuation par un orifice d'évacuation.

Le principe de la mesure de la densité d'un échantillon à l'aide d'un tel densimètre consiste à faire vibrer le tube en U à la fréquence de résonance et à déterminer cette fréquence à l'aide des moyens de lecture.

La fréquence de résonance permet en effet de calculer en première approximation, la densité de l'échantillon à analyser en se basant sur une équation standard connue en elle-même et à partir d'une calibration préalable du densimètre.

L'injection d'un échantillon à analyser dans le tube en U d'une cellule densimétrique de ce type peut être effectuée manuellement sous pression au moyen d'une simple seringue équipée d'un embout que l'on introduit dans l'orifice d'injection.

Une telle opération est toutefois longue et incommode et peut en outre entraîner des pertes d'échantillon.

Pour faciliter cette injection, on a déjà proposé des densimètres équipés d'un dispositif d'injection automatique sous pression des échantillons à analyser.

Ces dispositifs comportent un carrousel distributeur rotatif équipé sur sa périphérie d'un ensemble de récipients en particulier de cylindres de réception d'échantillons à analyser pouvant être fermés par un bouchon.

Ces récipients peuvent successivement être positionnés au droit d'un poste d'injection au niveau duquel ils sont reliés d'une part à une tubulure d'injection connectée à l'orifice d'injection de la cellule densimétrique et d'autre part, à une tubulure connectée à une source de pression.

L'introduction d'un échantillon à analyser dans un récipient équipant le carrousel distributeur et le montage sur ce récipient de la tubulure d'injection et de la tubulure de mise sous pression au niveau du poste d'injection correspondent toutefois à des opérations longues et peu aisées.

Parallèlement à ces dispositifs d'injection sous pression, on a également déjà proposé d'injecter les échantillons à analyser dans la cellule densimétrique sous vide en connectant l'orifice d'évacuation du tube en U à une source de vide, en particulier une pompe à vide.

Dans de tels dispositifs d'injection sous vide un récipient contenant l'échantillon à analyser peut être relié à l'orifice d'injection du tube en U par une tubulure d'injection.

De tels dispositifs présentent toutefois l'inconvénient de ne convenir que pour l'analyse d'échantillons de faible viscosité, et de nécessiter après chaque mesure, une étape de rinçage longue et incommode et impliquant de surcroît l'utilisation d'une grande quantité de solvant, ce qui est préjudiciable à l'environnement.

Il existe également actuellement sur le marché des densimètres équipés de dispositifs d'injection sous vide comportant un carrousel distributeur automatisé muni sur sa périphérie d'un ensemble de récipients de réception d'échantillons à analyser.

De tels récipients sont successivement positionnés au droit d'un poste d'injection au niveau duquel ils sont reliés à une tubulure d'injection connectée à l'orifice d'injection de la cellule densimétrique.

De tels dispositifs à carrousel distributeur automatisé présentent toutefois les inconvénients susmentionnés des dispositifs d'injection sous vide concernant l'impossibilité d'analyser des échantillons visqueux et l'obligation de mettre en oeuvre des étapes de rinçage nécessitant de grandes quantités de solvants.

De plus, l'introduction d'un échantillon à analyser dans un récipient équipant le carrousel distributeur et le montage de la tubulure d'injection sur ce récipient au niveau du poste d'injection correspondent la encore à des opérations longues et peu aisées.

Il est, par ailleurs, à noter que l'on a déjà proposé conformément au document US 5 316 730 A un procédé d'injection d'un échantillon à analyser dans le tube d'injection d'une cellule de mesure, en particulier d'un densimètre, ce tube d'injection s'étendant verticalement vers le haut et étant équipé à son extrémité libre faisant saillie vers l'extérieur d'un orifice d'injection d'un échantillon à analyser, ce procédé comprenant les étapes suivantes :
- on introduit l'échantillon à analyser dans une seringue à usage unique standard (1), cette seringue (1) comportant un corps de pompe (4) se prolongeant par un embout male (2) et dans lequel se déplace un piston (3),
- on ferme la seringue (1) au moyen d'un capuchon de type luer consommable (6) comportant d'une part une extrémité femelle (7) recevant l'embout (2) du corps de pompe (4) et d'autre part une extrémité mâle (8) fermée par un opercule percutable (10),
- on fixe la seringue (1) ainsi fermée essentiellement verticalement, capuchon (6) en bas, sur un support équipant un dispositif d'injection, ce dispositif d'injection comportant un poste d'injection (12) situé au droit de l'orifice d'injection (15) du tube d'injection.

D'autres procédés d'injection sont également divulgués dans les documents US 2009/000188 A1 ; WO 97/32645 A1 et US 2005/255604 A1.

### But de l'invention

La présente invention a pour objet de proposer un procédé d'injection d'un échantillon à analyser dans le tube d'injection d'un densimètre de nature à remédier à ces inconvénients.

Il est à noter que ce procédé n'est pas limité à l'injection d'échantillons à analyser dans une cellule densimétrique équipée d'un tube en U du type susmentionné mais s'adapte plus généralement à toute cellule de mesure équipée d'un tube d'injection s'étendant essentiellement verticalement vers le haut et muni, à son extrémité libre faisant saillie vers l'extérieur d'un orifice d'injection d'un échantillon à analyser.

### Exposé et avantages de l'invention

Selon ce procédé, on utilise pour injecter l'échantillon à analyser dans l'orifice d'injection du tube de la cellule de mesure, une seringue à usage unique standard comportant un corps de pompe se prolongeant par un embout mâle et dans lequel se déplace un piston.

Ce procédé est basé sur deux étapes essentielles consistant d'une part à équiper le tube d'injection de la cellule de mesure d'un poinçon à sa partie interne, au niveau de l'orifice d'injection, ce à la construction, et d'autre part à fermer la seringue, après introduction de l'échantillon à analyser dans celle-ci, au moyen d'un capuchon de type luer consommable comportant une extrémité femelle recevant l'embout du corps de pompe ainsi qu'une extrémité mâle fermée par un opercule percutable.

Une telle seringue standard ainsi qu'un tel capuchon consommable correspondent à des éléments de coût particulièrement faible.

Selon l'invention, on fixe la seringue renfermant l'échantillon à analyser ainsi fermée par un capuchon consommable essentiellement verticalement, capuchon en bas, sur un support équipant un dispositif d'injection.

Ce dispositif d'injection comporte un poste d'injection situé au droit de l'orifice d'injection du tube d'injection et muni d'un poussoir.

Au niveau de ce poste la seringue positionnée sur le support peut être déplacée, par translation verticale d'une position haute ou position de positionnement vers une position basse ou position d'injection.

L'étape suivante du procédé conforme à l'invention, consiste à positionner le support ainsi équipé de la seringue en position haute au droit du poste d'injection de sorte que le piston de la seringue soit situé en regard du poussoir et que le capuchon soit situé en regard de l'orifice d'injection du tube d'injection.

On déplace ensuite la seringue en position basse de sorte que le poinçon perfore l'opercule du capuchon, puis on actionne le poussoir de façon à déplacer le piston de la seringue vers le bas et à injecter l'échantillon contenu dans celle-ci dans le tube d'injection de la cellule de mesure..

La mise en oeuvre du procédé conforme à l'invention est particulièrement aisée, tant en ce qui concerne le remplissage de la seringue à partir d'un récipient renfermant l'échantillon à analyser, que l'introduction de cet échantillon dans l'orifice d'injection du tube d'injection de la cellule de mesure.

Ce procédé présente en outre l'avantage de permettre l'analyse d'échantillons faiblement visqueux mais également visqueux, et de ne pas nécessiter après chaque mesure d'étapes de rinçage complexes impliquant l'utilisation de grandes quantités de solvants.

Selon une autre caractéristique de l'invention, l'extrémité femelle du capuchon consommable est entourée d'une collerette moletée ayant pour fonction principale de permettre de guider l'ensemble constitué par la seringue et le capuchon lors de sa mise en place sur le support du dispositif d'injection.

Ce moletage facilite parallèlement la préhension du capuchon consommable et son serrage par pression sur l'embout mâle de la seringue.

Conformément à l'invention, le dispositif d'injection équipé du support peut être un dispositif ne comportant qu'un seul poste d'alimentation ou un dispositif automatisé comportant plusieurs postes d'alimentation.

Selon une première variante de l'invention dans laquelle le dispositif d'injection ne comporte qu'un seul poste d'alimentation, le support peut être un chariot monté au droit du poste d'injection et comportant un logement de réception d'une seringue, ou encore un réceptacle fixe équipé d'un tiroir pivotant permettant le chargement d'une seringue.

Dans le premier cas, le chariot est mobile en translation entre la position haute et la position basse.

Dans le second cas, le poste d'injection est en outre équipé d'une fourchette permettant de déplacer la seringue en position basse.

Selon une seconde variante de l'invention dans laquelle le dispositif d'injection comporte plusieurs postes d'alimentation, le support est un carrousel distributeur rotatif comportant sur sa périphérie, un ensemble de logements de réception d'une seringue pouvant successivement être positionnés au droit du poste d'injection.

### Dessins

Les caractéristiques du procédé d'injection conforme à l'invention, seront décrites plus en détail en se référant aux dessins non limitatifs annexés dans lesquels :
- Les figures 1a, 1b et 1c sont des schémas illustrant les premières étapes de la mise en oeuvre du procédé conforme à l'invention.
- La figure 2 est une vue en perspective d'un capuchon consommable.
- La figure 3 est une vue en coupe de ce même capuchon.
- La figure 4 représente un appareil de mesure de la densité d'un échantillon ne comportant qu'un seul poste d'alimentation.
- La figure 5 représente le poste d'injection de l'appareil représenté sur la figure 5.
- La figure 6 représente un appareil de mesure de la densité d'un échantillon comportant plusieurs postes d'alimentation.

### Description d'un mode de réalisation de l'invention

Selon la figure la, pour la mise en oeuvre du procédé conforme à l'invention, on utilise une seringue standard à usage unique 1, comportant un corps de pompe 4 se prolongeant par un embout mâle 2 et dans lequel se déplace un piston 3.

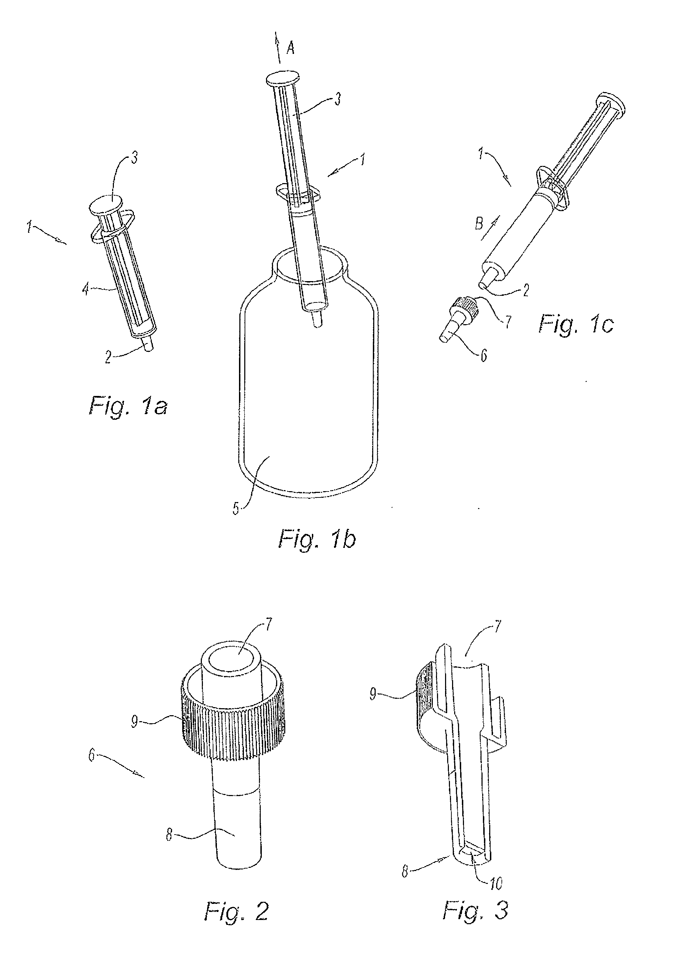

Selon la figure 1b, la première étape de ce procédé consiste à prélever l'échantillon à analyser dans un récipient 5 à l'aide de la seringue 1 en déplaçant le piston 3 comme schématisé par la flèche A.

Selon la figure 1c, la seconde étape de ce procédé, consiste à fermer l'embout mâle 2 de la seringue 1 au moyen d'un capuchon de type luer consommable 6 comme schématisé par la flèche B.

Selon la figure 2, le capuchon consommable 6 comporte une extrémité femelle 7 qui reçoit l'embout 2 de la seringue 1 ainsi qu'une extrémité mâle 8.

L'extrémité femelle 7 du capuchon consommable 6, est entourée d'une collerette moletée 9.

Selon la figure 3, l'extrémité mâle 8 du capuchon consommable 6, est fermée par un opercule percutable 10.

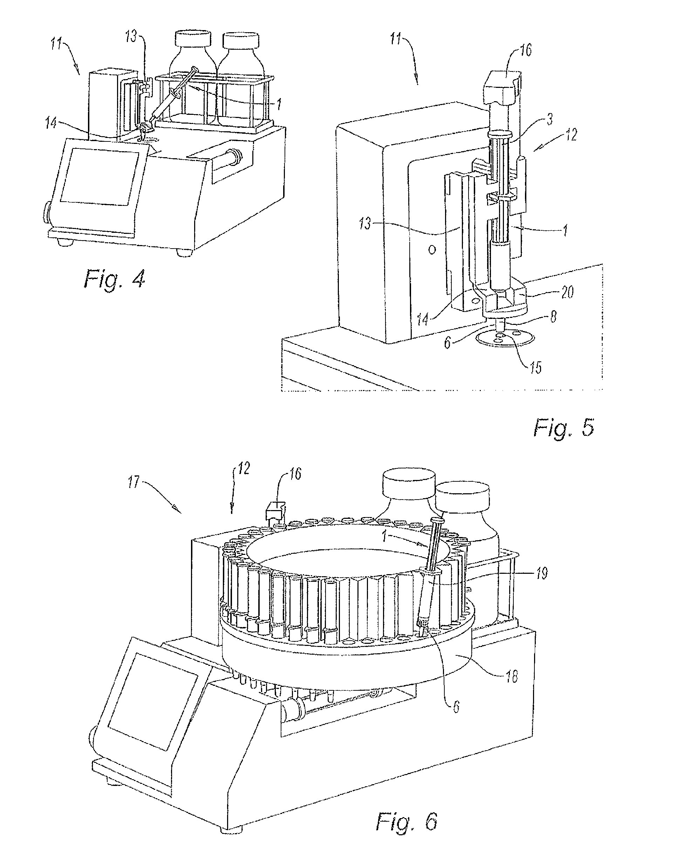

Comme représenté sur les figures 4 et 5 selon la première variante de l'invention, le procédé d'injection est mis en oeuvre dans un appareil de mesure de la densité d'un échantillon à analyser 11 ne comportant qu'un seul poste d'alimentation.

Selon la figure 5, l'appareil de mesure 11 comporte une cellule de mesure dans laquelle l'échantillon à analyser est introduit par un orifice d'injection 15 ainsi qu'un poste d'injection 12.

De façon non représentée sur les figures, l'orifice d'injection 15 est équipé d'un poinçon à sa partie interne.

Le poste d'injection 12 est quant à lui équipé d'un chariot 13 mobile en translation verticale entre une position haute et une position basse et situé au droit de l'orifice d'injection 15 ainsi que d'un poussoir 16.

Le chariot 13 comporte un logement de réception 14 d'une seringue 1 équipée d'un capuchon consommable 6, positionnée verticalement, piston 3 en haut ainsi qu'une ouverture de maintien 20 de la collerette 9 de ce capuchon.

Dans cette mesure, le chariot 13 constitue le poste d'alimentation de l'appareil.

Comme représenté sur la figure 5, lorsqu'une seringue 1 est positionnée dans le logement de réception 14, le poussoir 16 est situé en regard de l'extrémité du piston 3.

Selon la figure 4, lors de la mise en oeuvre du procédé conforme à l'invention, le technicien présente une seringue 1 préalablement remplie d'échantillon et fermée par un capuchon consommable 6 au droit du logement de réception 14, puis selon la figure 5, la positionne verticalement dans l'ouverture de maintien 20 de sorte qu'elle se trouve fixée dans le chariot 13 alors en position haute.

Lors de cette étape, la collerette moletée 9 qui entoure l'extrémité femelle 7 du capuchon consommable 6, permet de guider la mise en place de la seringue dans le chariot 13.

Lors de l'étape suivante, le chariot 13 déplace automatiquement la seringue 1, en position basse de sorte que l'extrémité mâle 8 du capuchon consommable 6 pénètre dans l'orifice d'injection 15.

Au cours de ce déplacement, le poinçon monté à la partie interne de l'orifice d'injection 15 perfore l'opercule 10 du capuchon consommable 6.

La dernière étape du procédé conforme à l'invention consiste à actionner le poussoir 16 de façon à déplacer le piston 3 de la seringue 1 vers le bas et à injecter l'échantillon contenu dans celle-ci dans le tube d'injection de l'appareil.

Selon la figure 6, l'appareil de mesure de la densité d'un échantillon à analyser 17 est un appareil conforme à la seconde variante de l'invention ; cet appareil est équipé d'un carrousel distributeur rotatif 18 comportant sur sa périphérie un ensemble de logements de réception 19 d'une seringue 1 préalablement remplie d'un échantillon à analyser et équipée d'un capuchon consommable 6.

La rotation du carrousel distributeur 18 permet d'amener successivement les logements de réception 19 et les seringues 1 au droit d'un poste d'injection 12 essentiellement similaire à celui représenté sur la figure 5 et situé au droit de l'orifice d'injection 15.

Au niveau de ce poste, une fourchette non visible sur la figure permet de faire descendre la seringue 1 de sorte que l'extrémité mâle 8 du capuchon consommable 6, pénètre dans l'orifice d'injection 15 et que l'opercule 10 soit perforé par le poinçon équipant cet orifice de façon à permettre l'injection de l'échantillon à analyser dans l'appareil.

## Revendications

1. Procédé d'injection d'un échantillon à analyser dans le tube d'injection d'une cellule de mesure, en particulier d'un densimètre, ce tube d'injection s'étendant verticalement vers le haut et étant équipé à son extrémité libre faisant saillie vers l'extérieur d'un orifice d'injection d'un échantillon à analyser, ce procédé comprenant les étapes suivantes :
- on introduit l'échantillon à analyser dans une seringue à usage unique standard (1), cette seringue (1) comportant un corps de pompe (4) se prolongeant par un embout mâle (2) et dans lequel se déplace un piston (3),
- on ferme la seringue (1) au moyen d'un capuchon de type luer consommable (6) comportant d'une part une extrémité femelle (7) recevant l'embout (2) du corps de pompe (4) et d'autre part une extrémité mâle (8) fermée par un opercule percutable (10),
- on fixe la seringue (1) ainsi fermée essentiellement verticalement, capuchon (6) en bas, sur un support équipant un dispositif d'injection, ce dispositif d'injection comportant un poste d'injection (12) situé au droit de l'orifice d'injection (15) du tube d'injection
**caractérisé par** les étapes suivantes :
- on équipe le tube d'injection d'un poinçon à sa partie interne, au niveau de l'orifice d'injection (15),
- le poste d'injection (12) est muni d'un poussoir (16), et au niveau de ce poste la seringue (1) positionnée sur le support, peut être déplacée par translation verticale d'une position haute ou position de positionnement vers une position basse ou position d'injection,
- on positionne le support au droit du poste d'injection (12) de sorte que le piston (3) de la seringue (1) soit situé en regard du poussoir (16) et que le capuchon (6) soit situé en regard de l'orifice d'injection (15) du tube d'injection,
- on déplace la seringue (1) en position basse de sorte que le poinçon perfore l'opercule (10) du capuchon (6), et
- on actionne le poussoir (16) de façon à déplacer le piston (3) de la seringue (1) vers le bas et à injecter l'échantillon contenu dans celle-ci dans le tube d'injection.

2. Procédé selon la revendication 1,
**caractérisé en ce que**
l'extrémité femelle (7) du capuchon consommable (6) est entourée d'une collerette moletée (9).

3. Procédé selon l'une quelconque des revendications 1 et 2
**caractérisé en ce que**
le support est un chariot (13) mobile en translation verticale entre la position haute et la position basse monté au droit du poste d'injection (12) et comportant un logement de réception (14) d'une seringue (1).

4. Procédé selon l'une quelconque des revendications 1 et 2,
**caractérisé en ce que**
le support est un réceptacle fixe équipé d'un tiroir pivotant permettant le chargement d'une seringue (1).

5. Procédé selon l'une quelconque des revendications 1 et 2
**caractérisé en ce que**
le support est un carrousel distributeur rotatif (18) comportant sur sa périphérie un ensemble de logements de réception (19) d'une seringue (1) pouvant successivement être positionnés au droit du poste d'injection (12).

## Patentansprüche

1. Verfahren zur Injektion einer zu analysierenden Probe in das Injektionsrohr einer Messzelle, insbesondere eines Dichtemessgeräts, wobei sich dieses Injektionsrohr vertikal nach oben erstreckt und an seinem nach außen vorspringenden freien Ende mit einer Öffnung zur Injektion einer zu analysierenden Probe versehen ist, wobei dieses Verfahren die folgenden Schritte umfasst:
- Einführen der zu analysierenden Probe in eine Standard-Einwegspritze (1), wobei diese Spritze (1) einen Pumpenkörper (4) umfasst, der durch einen männlichen Ansatz (2) verlängert wird und in dem sich ein Kolben (3) bewegt,
- Verschließen der Spritze (1) mit Hilfe eines Verschlusses vom Typ eines verbrauchbaren Luer-Lock-Anschlusses (6), der Folgendes umfasst: einerseits ein weibliches Ende (7), das den Ansatz (2) des Pumpenkörpers (4) aufnimmt, und andererseits ein männliches Ende (8), das durch einen durchstoßbaren Deckel (10) verschlossen wird,
- Befestigen der so verschlossenen Spritze (1) auf im Wesentlichen vertikale Weise mit nach unten gerichtetem Verschluss (6) auf einem Träger, mit dem eine Injektionsvorrichtung ausgestattet ist, wobei diese Injektionsvorrichtung eine Injektionsstation (12) umfasst, die gegenüber der Injektionsöffnung (15) des Injektionsrohrs angeordnet ist,
**gekennzeichnet durch** die folgenden Schritte:
- Ausstatten des Injektionsrohrs mit einem Dorn in seinem inneren Teil im Bereich der Injektionsöffnung (15),
- Ausstatten der Injektionsstation (12) mit einer Druckvorrichtung (16), wobei die auf dem Träger angeordnete Spritze (1) im Bereich dieser Station **durch** eine vertikale Verschiebebewegung von einer oberen Stellung oder Positionierungsstellung in eine untere Stellung oder Injektionsstellung gebracht werden kann,
- Positionieren des Trägers gegenüber der Injektionsstation (12), so dass der Kolben (3) der Spritze (1) gegenüber der Druckvorrichtung (16) angeordnet ist und der Verschluss (6) gegenüber der Injektionsöffnung (15) des Injektionsrohrs angeordnet ist,
- Bewegen der Spritze (1) in die untere Stellung, so dass der Dorn den Deckel (10) des Verschlusses (6) durchstößt, und
- Betätigen der Druckvorrichtung (16), so dass der Kolben (3) der Spritze (1) nach unten bewegt wird und die darin befindliche Probe in das Injektionsrohr injiziert wird.

2. Verfahren nach Anspruch 1,
**dadurch gekennzeichnet, dass**
das weibliche Ende (7) des verbrauchbaren Verschlusses (6) von einem gerändelten Hals (9) umgeben ist.

3. Verfahren nach einem der Ansprüche 1 und 2,
**dadurch gekennzeichnet, dass**
der Träger ein zwischen der oberen Stellung und der unteren Stellung vertikal verschiebbarer Schlitten (13) ist, der gegenüber der Injektionsstation (12) angeordnet ist und eine Aufnahme (14) für eine Spritze (1) umfasst.

4. Verfahren nach einem der Ansprüche 1 und 2,
**dadurch gekennzeichnet, dass**
der Träger ein feststehender Behälter ist, der mit einem schwenkbaren Schubfach versehen ist, in das eine Spritze (1) geladen werden kann.

5. Verfahren nach einem der Ansprüche 1 und 2,
**dadurch gekennzeichnet, dass**
der Träger ein drehbares Verteilerkarussell (18) ist, das an seinem Umfang eine Gruppe von Aufnahmen (19) für eine Spritze (1) umfasst, die nacheinander gegenüber der Injektionsstation (12) positioniert werden können.

## Claims

1. Method for injecting a sample to be analysed into the injection tube of a measuring cell, in particular of a densitometer, the injection tube extending vertically upwards and being equipped at its outwardly projecting free end with an injection orifice for a sample to be analysed, the method comprising the following steps:
- the sample to be analysed is introduced into a standard single-use syringe (1), the syringe (1) comprising a pump body (4) which is extended by a male endpiece (2) and in which a plunger (3) moves,
- the syringe (1) is closed by means of an expendable luer-type cap (6) comprising on the one hand a female end (7) which receives the end-piece (2) of the pump body (4) and on the other hand a male end (8) which is closed by a perforable seal (10),
- the syringe (1) so closed is secured substantially vertically, with the cap (6) at the bottom, on a support provided on an injection device, the injection device comprising an injection station (12) located in alignment with the injection orifice (15) of the injection tube,
**characterised by** the following steps:
- the injection tube is equipped with a punch in its inner portion, in the region of the injection orifice (15),
- the injection station (12) is provided with a pusher (16), and in the region of the station the syringe (1) positioned on the support can be moved by vertical translation from a top position or positioning position to a bottom position or injection position,
- the support is positioned in alignment with the injection station (12) so that the plunger (3) of the syringe (1) is located opposite the pusher (16) and the cap (6) is located opposite the injection orifice (15) of the injection tube,
- the syringe (1) is moved into the bottom position so that the punch perforates the seal (10) of the cap (6), and
- the pusher (16) is actuated in order to move the plunger (3) of the syringe (1) downwards and inject the sample contained in the syringe (1) into the injection tube.

2. Method according to claim 1,
**characterised in that**
the female end (7) of the expendable cap (6) is surrounded by a knurled collar (9).

3. Method according to either claim 1 or claim 2,
**characterised in that**
the support is a carriage (13) which is movable in vertical translation between the top position and the bottom position and is mounted in alignment with the injection station (12) and comprises a receiving housing (14) for a syringe (1).

4. Method according to either claim 1 or claim 2,
**characterised in that**
the support is a stationary receptacle equipped with a pivoting drawer permitting loading of a syringe (1).

5. Method according to either claim 1 or claim 2,
**characterised in that**
the support is a revolving distribution carousel (18) comprising on its periphery a group of receiving housings (19) for a syringe (1), which receiving housings (19) can be positioned in succession in alignment with the injection station (12).
